# EUROPÄISCHE PATENTSCHRIFT

(11) **EP 4 017 697 B1**
(45) Veröffentlichungstag und Bekanntmachung des Hinweises auf die Patenterteilung: **25.12.2024**
(21) Anmeldenummer: 20750221.2
(22) Anmeldetag: 29.07.2020
(51) Int. Cl.: B29C 43/18, B29C 43/32, B29C 70/46, B32B 5/02, B32B 5/12, B32B 5/26, B32B 27/08, B32B 27/34, B64C 1/06, B64F 5/10, B29C 33/00, B29L 31/30, B29L 31/08, B29C 35/04, B29K 77/00, B29K 105/08, B29K 101/12

(54) **VERFAHREN ZUM ERZEUGEN EINES BAUELEMENTS**
METHOD FOR PRODUCING A STRUCTURAL COMPONENT
PROCÉDÉ DE PRODUCTION D'UN COMPOSANT STRUCTUREL

(30) Priorität: 22.08.2019 DE 102019005908
(43) Veröffentlichungstag der Anmeldung: 29.06.2022
(73) Patentinhaber: Siempelkamp Maschinen- und Anlagenbau GmbH, 47803 Krefeld (DE)
(72) Erfinder: KÖFFERS, Fabian, 47807 Krefeld (DE); SCHÖLER, Michael, 47509 Rheurdt (DE); SCHÜRMANN, Klaus, 41363 Jüchen (DE); SEBASTIAN, Lothar, 47239 Duisburg (DE)
(74) Vertreter: Keil & Schaafhausen Patentanwälte PartGmbB
(86) Internationale Anmeldenummer: PCT/EP2020/071405
(87) Internationale Veröffentlichungsnummer: WO 2021/032428

(56) Entgegenhaltungen:
- EP-A1- 3 233 444
- EP-B1- 3 233 444
- DE-A1- 102010 035 493
- DE-T2- 69 308 471
- JP-A- 2007 090 764
- US-B2- 9 067 345

## Beschreibung

Die vorliegende Erfindung betrifft ein Verfahren zum Erzeugen eines Bauelements, insbesondere eines Luft-, Land- oder Wasserfahrzeugs oder eines Rotorblatts einer Windenergieanlage, bei dem man eine Anordnung aus Fasern und Kunststoff in eine Form einlegt und mit erhöhtem Druck und erhöhter Temperatur beaufschlagt, wobei man eine Form verwendet, die mindestens eine Ausnehmung aufweist, in der man ein Verstärkungselement anordnet.

DE 693 08 471 T2 zeigt einen Formkörper aus Verbundwerkstoff und ein Verfahren zu seiner Herstellung. Hier werden zwei mehrschichtige Platten durch Aufbringen von Druck und erhöhter Temperatur miteinander verbunden. Wenn man eine Stoßstange erzeugen möchte, ist eine der Platten mit einer Rinne versehen, in die ein aufgeschäumter Körper aus Polypropylen Harz hineingestopft wird. Die Rinne wird dann durch eine Vorderplatte verschlossen.

US 9 067 345 B2 zeigt ein Formwerkzeug und ein Verfahren zur Herstellung von Faserverbundbauteilen. Hier ist eine Kavität vorgesehen, die gegenüberliegend zur Angriffslinie und parallel zur Angriffslinie angeordnet ist und sich mit überschüssigem Matrixmaterial und ggfs. Fremdkörpern sowie Luft füllen kann.

Ein weiteres Verfahren zum Erzeugen eines Bauelements ist beispielsweise aus DE 10 2017 113 595 A1 bekannt.

Die Anordnung aus Fasern und Kunststoff bildet später die Haut oder Wand des Bauelements, die durch das Verstärkungselement, das auch als "Stringer" bezeichnet wird, verstärkt wird. Insbesondere dient das Verstärkungselement dazu, das Bauelement zu versteifen. Das Bauelement kann dann als Karosserieelement oder Rumpfelement für eines der genannten Fahrzeuge verwendet werden. Wenn die Haut beispielsweise als Halbschale ausgebildet ist, dann kann man zwei derartige Halbschalen mit entgegengesetzter Orientierung zusammensetzen, um einen Rumpf oder eine Kabine eines Flugzeugs zu bauen.

Wenn man die Anordnung aus Fasern und Kunststoff mit erhöhtem Druck und erhöhter Temperatur beaufschlagt, dann schmilzt der Kunststoff auf und bildet einen innigen Verbund mit den Fasern. Nach dem Abkühlen und Erstarren des Kunststoffs ergibt sich dann ein mechanisch sehr stabiles Bauelement. Es ist dabei allerdings von einer gewissen Bedeutung, dass man bis zum Abkühlen der Haut einen gewissen Druck erzeugt und aufrechterhält, der nicht nur auf die Anordnung aus Fasern und Kunststoff wirkt, sondern auch auf das Verstärkungselement.

Gleichzeitig möchte man aber die Kosten bei der Herstellung des Bauelements möglichst klein halten können.

Der Erfindung liegt die Aufgabe zugrunde, ein Bauelement eines Luft-, Land- oder Wasserfahrzeugs mit geringen Kosten zu erzeugen.

Diese Aufgabe wird bei einem Verfahren der eingangs genannten Art dadurch gelöst, dass man das Verstärkungselement, das bei Beaufschlagung mit erhöhter Temperatur einen zähflüssigen Zustand enthält, gemeinsam mit einem Kern in die Ausnehmung einlegt, wobei man ein Differenzvolumen zwischen Ausnehmung und Kern zumindest in einem vorbestimmten Bereich um ein vorbestimmtes Maß kleiner wählt als ein in diesem Bereich angeordneter Abschnitt des Verstärkungselements.

Bei der Herstellung des Bauelements verwendet man aus Kostengründen vielfach Stringer oder Verstärkungselemente, die als Halbzeug angeliefert werden. Derartige Verstärkungselemente haben relativ große Toleranzen, d.h. ihre Au-ßenabmessungen unterscheiden sich merklich um mehrere Prozent. Ein anderes oder zusätzliches Problem ergibt sich aus unterschiedlichen Wärmeausdehnungen zwischen dem Werkstoff und dem Material der Form und/oder des Kerns. Unabhängig von der Ursache kann dies dazu führen, dass der Druck auf das Verstärkungselement während des Beaufschlagens der Anordnung aus Fasern und Kunststoff absinkt oder sogar ganz verloren geht. Wenn man die Anordnung aus Fasern und Kunststoff, die im Folgenden kurz als "Haut" bezeichnet wird, mit erhöhter Temperatur beaufschlagt, führt dies nicht nur dazu, dass der Kunststoff der Haut aufschmilzt. Die erhöhte Temperatur pflanzt sich auch in das Verstärkungselement fort, so dass der dort angeordnete Kunststoff nun ebenfalls weich wird und einen zähflüssigen, Sirup ähnlichen Zustand erhält. In diesem Zustand muss ein gewisser Druck aufrechterhalten werden, um später eine gewünschte Form zu erhalten. Wenn man die Kavität, also das Differenzvolumen zwischen Ausnehmung und Kern, etwas kleiner wählt als das Verstärkungselement, wobei man dieses "kleiner" auf vorbestimmte Bereiche oder zumindest einen vorbestimmten Bereich des Verstärkungselements beschränken kann, dann wird das Halbzeug für das Verstärkungselement etwas gequetscht. Der zähflüssige Werkstoff des Verstärkungselements führt dazu, dass das Verstärkungselement dann unter einem hydrostatischen Druck steht. Damit wird eine gleichmäßige Druckverteilung erreicht. Zwar kann der Druck durch unterschiedliche Wärmeausdehnungskoeffizienten etwas abnehmen, fällt aber nicht auf Null. Das Verstärkungselement und die Anordnung aus Fasern und Kunststoff stehen also stetig unter Druck.

Vorzugsweise weist das Differenzvolumen außerhalb des vorbestimmten Abschnitts mindestens einen Verdrängungsbereich auf. Der Druck in der Ausnehmung sollte möglichst nicht zu groß werden. Dies lässt sich einerseits dadurch erreichen, dass man das "kleiner" des Differenzvolumens relativ genau auf den verwendeten Werkstoff des Verstärkungselements abstimmt. Dies ist jedoch bei großen Toleranzen des Verstärkungselements schwierig. Man kann nun einen Verdrängungsbereich vorsehen, in dem "überschüssiger Kunststoff" des Verdrängungselements verdrängt werden kann. Der Verdrängungsbereich muss allerdings nicht unbedingt in der Lage sein, das gesamte überschießende Volumen des Verstärkungselements aufzunehmen. Man kann durchaus in Kauf nehmen, dass ein kleiner Teil des Volumens des Verstärkungselements im Bereich der Anordnung aus Fasern und Kunststoff verbleibt und dort zu einer kleinen Verdickung führt.

Vorzugsweise ist zumindest ein Verdrängungsbereich auf einer Seite des Verstärkungselements angeordnet, die von der Anordnung aus Fasern und Kunststoff abgewandt ist. Bei der Beaufschlagung mit erhöhter Temperatur und erhöhtem Druck wirkt zumindest der Druck von der Seite der Anordnung aus Fasern und Kunststoff auf das Verstärkungselement. Bis sich die erhöhte Temperatur zu dem abgewandten Ende fortgepflanzt hat, vergeht eine gewisse Zeit. In dieser Zeit kann der Kunststoff des Verstärkungselements zwar zähfließend werden. Er kann auch in den Verdrängungsbereich ausweichen, muss hierbei aber einen Teil des Verstärkungselements passieren, das damit sozusagen eine Drossel bildet, die den Druck in der Ausnehmung aufrechterhält.

Vorzugsweise ist der Verdrängungsbereich mit dem vorbestimmten Abschnitt über eine Drosselstelle verbunden. Diese Drosselstelle kann einfach in einer Querschnittsverengung bestehen. Sie erlaubt ein Ausweichen des Kunststoffs des Verstärkungselements in den Verdrängungsbereich, hält aber einen Druck im übrigen Differenzvolumen aufrecht.

Bevorzugterweise weist das Verstärkungselement eine Höhe auf und die Ausnehmung weist eine Tiefe auf, die kleiner ist als die Höhe. Die Höhe des Verstärkungselements ist die Abmessung senkrecht zur Anordnung aus Fasern und Kunststoff. Wenn die Ausnehmung geringfügig weniger tief ist als diese Höhe, dann wird das Verstärkungselement gestaucht, wenn der erhöhte Druck aufgebracht wird.

Alternativ oder zusätzlich kann man ein Verstärkungselement verwenden, das einen von der Anordnung aus Fasern und Kunststoff abstehenden Steg aufweist und ein Abstand zwischen dem Kern und einer Wand der Ausnehmung im Bereich des Stegs kleiner ist als eine Dicke des Steges. Bei einer Beaufschlagung der Anordnung aus Fasern und Kunststoff mit erhöhtem Druck und erhöhter Temperatur wird dann der Kern in die Ausnehmung gepresst und übt einen Druck auf den Steg aus.

Vorzugsweise kann man ein Verstärkungselement verwenden, das mindestens einen an der Anordnung aus Fasern und Kunststoff anliegenden ersten Schenkel aufweist, wobei die Ausnehmung einen ersten Teilbereich zur Aufnahme des ersten Schenkels aufweist und der erste Teilbereich eine Tiefe aufweist, die kleiner ist als eine Dicke des ersten Schenkels. Hier gilt das Gleiche wie beim Steg. Wenn die Anordnung aus Fasern und Kunststoff mit erhöhtem Druck und erhöhter Temperatur beaufschlagt wird, wird der Schenkel in seiner Dickenrichtung komprimiert, also mit Druck beaufschlagt.

Hierbei ist bevorzugt, dass der erste Teilbereich eine erste Verlängerung in eine Richtung parallel zur Anordnung aus Fasern und Kunststoff aufweist, die eine Länge des ersten Teilbereichs über die Länge des ersten Schenkels hinaus verlängert, wobei die erste Verlängerung eine Tiefe aufweist, die kleiner ist als die Tiefe des ersten Teilbereichs außerhalb der Verlängerung. Die Verlängerung bildet dann ein Verdrängungsvolumen. Da die Verlängerung eine Tiefe aufweist, die kleiner ist als die Tiefe des ersten Teilbereichs außerhalb der Verlängerung, ist hier die oben genannte Drosselstelle vorhanden, die ein Vordringen eines Zuviel an Kunststoff des Verstärkungselements zwar erlaubt, aber diesem Vordringen einen gewissen Widerstand entgegensetzt, so dass der hydrostatische Druck, der auf das Verstärkungselement wirkt, aufrechterhalten bleibt.

Vorzugsweise verwendet man ein Verstärkungselement, das an einem vom ersten Schenkel abgewandten Ende einen zweiten Schenkel aufweist, wobei die Ausnehmung einen zweiten Teilbereich zur Aufnahme des zweiten Schenkels aufweist und der zweite Teilbereich eine Tiefe aufweist, die kleiner ist als eine Dicke des zweiten Schenkels. Hier gilt das Gleiche wie für den ersten Schenkel.

Auch hier kann vorgesehen sein, dass der zweite Teilbereich eine zweite Verlängerung in eine Richtung parallel zur Anordnung aus Fasern und Kunststoff aufweist, die eine Länge des zweiten Teilbereichs über die Länge des zweiten Schenkels hinaus verlängert, wobei die zweite Verlängerung eine Tiefe aufweist, die kleiner ist als eine Tiefe des zweiten Teilbereichs außerhalb der Verlängerung.

Für die Durchführung eines derartigen Verfahrens kann man beispielsweise eine Form verwenden, in die man Prepregs einlegt. Als Prepregs kann man beispielsweise unidirektionale Prepregs verwenden, also Prepregs, bei denen Kohlefasern oder andere Verstärkungsfasern, wie beispielsweise Glasfasern, alle in der gleichen Richtung verlaufen. Alternativ dazu kann man auch Prepregs verwenden, bei denen Verstärkungsfasern in unterschiedlichen Richtungen angeordnet sind, wobei vorzugsweise für jede Richtung eine eigene Faserlage vorgesehen ist. Um Verstärkungsfasern in unterschiedlichen Richtungen anzuordnen, kann man auch mehrere unidirektionale Prepregs übereinander anordnen und durch die Ausrichtung der Prepregs eine entsprechende Richtung der Verstärkungsfasern vorgeben.

Die Verstärkungsfasern sind bei einem Prepreg mit einem Kunststoff vorimprägniert. Hierbei verwendet man vorzugsweise einen thermoplastischen Kunststoff, insbesondere Polyamid, beispielsweise PA6.

Für das Aufbringen der erhöhten Temperatur und des erhöhten Drucks verwendet man beispielsweise eine Membran, die einen Öldruckraum begrenzt. In den Öldruckraum kann man dann beispielsweise Öl mit erhöhter Temperatur, beispielsweise in einem Bereich von 350° C bis 410° C, einspeisen. Man kann das Öl auch beispielsweise dazu verwenden, die Temperatur nach dem Aufheizen wieder abzusenken, indem man beispielsweise die Temperatur des Öls auf einen Temperaturbereich von beispielsweise 20° bis 40° C, insbesondere 30° C abkühlt.

Das Einlegen der Prepregs kann man beispielsweise mit Hilfe von Tape-Layern vornehmen.

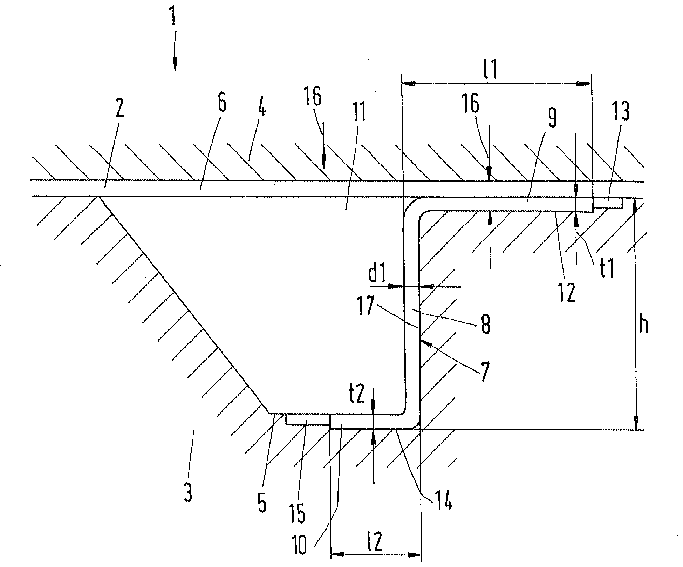

Die Erfindung wird im Folgenden anhand eines bevorzugten Ausführungsbeispiels in Verbindung mit der Zeichnung beschrieben. Hierin zeigt:
- die einzige Fig.: eine schematische Darstellung einer Form zum Erzeugen eines Bauelements.

Eine Form 1 zum Erzeugen eines nur schematisch dargestellten Bauelements 2 weist ein Unterwerkzeug 3 und ein Oberwerkzeug 4 auf. Das Unterwerkzeug 3 weist eine Ausnehmung 5 auf.

Zum Erzeugen des Bauelements wird eine Anordnung 6 aus Fasern und Kunststoff in das Unterwerkzeug 3 eingelegt. Die Anordnung 6 ist vorzugsweise durch so genannte Prepregs gebildet, bei denen Fasern bereits mit einem Kunststoff beaufschlagt sind. Als Fasern kann man vorzugsweise Kohlefasern oder andere hoch zugbeanspruchbare Fasern verwenden. Als Kunststoff wird vorzugsweise ein thermoplastischer Kunststoff verwendet, insbesondere Polyamid, beispielsweise PA6.

Die Fasern der Prepregs können unidirektional angeordnet sein, also alle in die gleiche Richtung verlaufen. Es ist aber auch möglich, Prepregs zu verwenden, bei denen mehrere Faserschichten vorhanden sind, deren Fasern in unterschiedliche Richtungen verlaufen. Man kann auch unidirektionale Prepregs verwenden, also Prepregs, bei denen alle Fasern in die gleiche Richtung verlaufen, und mehrere derartige Prepregs in unterschiedlichen Richtungen im Unterwerkzeug 3 anordnen. Die Faserrichtung richtet sich nach der später gewünschten Belastbarkeit des Bauelements 2. Beispielsweise kann man aus dem Bauelement 2 einen Rumpf oder eine Kabine eines Luft-, Land- oder Wasserfahrzeugs herstellen.

Die Fig. zeigt eine Form 1, bei der das Bauelement eine im Wesentlichen ebene Ausbildung erhält. Man kann die Form 1 aber auch so ausgestalten, dass zumindest leicht abgerundete Formen herstellbar sind, z.B. für eine Motorhaube. Auch kann man die Form 1 so ausgestalten, dass man schalenförmige Bauelemente 2 herstellen kann.

Die oben genannten Prepregs können von Hand oder von Tape Layern in die Form 1 eingelegt werden. Die Dicke des Bauelements 2 kann dadurch eingestellt werden, dass man mehr oder weniger Prepregs verwendet.

In die Ausnehmung legt man darüber hinaus ein Verstärkungselement 7 ein, das im vorliegenden Fall Z-förmig ausgebildet ist und einen Steg 8 aufweist, der im Wesentlichen senkrecht von der Anordnung 6 aus Fasern und Kunststoff vorsteht. Das Verstärkungselement 7 weist einen ersten Schenkel 9 auf, der an der Anordnung 6 aus Fasern und Kunststoff anliegt, und einen zweiten Schenkel 10 am anderen Ende des Verstärkungselements 7.

Das Verstärkungselement 7 wird gemeinsam mit einem Kern 11 in die Ausnehmung 5 eingelegt.

Die Ausnehmung 5 weist einen ersten Teilbereich 12 zur Aufnahme des ersten Schenkels 9 auf. Der erste Teilbereich 12 weist eine erste Verlängerung 13 auf, die eine Länge l1 des ersten Teilbereichs über die Länge des ersten Schenkels 9 hinaus verlängert. Die erste Verlängerung 13 weist allerdings eine Tiefe auf, die kleiner ist als eine Tiefe t1 des ersten Teilbereichs 12 außerhalb der Verlängerung 13.

Die Ausnehmung 5 weist darüber hinaus einen zweiten Teilbereich 14 zur Aufnahme des zweiten Schenkels 10 auf. Der zweite Teilbereich 14 weist eine Verlängerung 15 auf, die eine Länge l2 des zweiten Teilbereichs 14 über die Länge des zweiten Schenkels 10 hinaus verlängert. Die zweite Verlängerung 15 weist eine Tiefe auf, die kleiner ist als eine Tiefe t2 des zweiten Teilbereichs 14 außerhalb der Verlängerung.

Der Kern 11 hat ein Volumen, das kleiner ist als das Volumen der Ausnehmung 5. Dementsprechend ergibt sich, wenn der Kern 11 in die Ausnehmung 5 eingelegt ist, ein Differenzvolumen oder eine Kavität. Theoretisch soll dieses Differenzvolumen mit dem Volumen des Verstärkungselements 7 übereinstimmen.

Man weicht allerdings von einer derartigen Bemessung ab und wählt das Differenzvolumen oder die Kavität für das Verstärkungselement bewusst etwas kleiner als das Volumen des Verstärkungselements 7. Damit ist es möglich, während des Aufheizens, also der Beaufschlagung mit erhöhter Temperatur, und vor allem auch während des Abkühlens, also während des Absenkens der Temperatur, einen stetigen Druck auf das sich bildende Bauelement 2 aus der Anordnung 6 aus Fasern und Kunststoff und dem Verstärkungselement 7 aufrechtzuerhalten. Durch Toleranzen in der Fertigung, also Toleranzen bei dem Verstärkungselement 7, wie auch durch unterschiedliche Wärmeausdehnungen zwischen Werkstoffen und Material des Unterwerkzeugs 3 und des Kerns 11, kann dieser Druck im ungünstigen Fall verloren gehen oder so stark absinken, dass die gewünschte Qualität des Bauelements 2 nicht mehr garantiert werden kann.

Auch das Verstärkungselement kann mit dem oben angegebenen thermoplastischen Kunststoff, wie Polyamid, ausgebildet sein. Wenn die Anordnung 6 aus Fasern und Kunststoff über das Oberwerkzeug 4 mit erhöhter Temperatur und erhöhtem Druck beaufschlagt wird, was durch Pfeile 16 angedeutet ist, dann pflanzt sich die erhöhte Temperatur auch zum Verstärkungselement fort und führt dazu, dass das Halbzeug des Verstärkungselements nun flüssig oder fließfähig wird. Auch wenn das Verstärkungselement 7 nur einen zähflüssigen oder Sirup ähnlichen Zustand erhält, ist es erforderlich, das Verstärkungselement 7 unter dem oben beschriebenen Druck zu halten. Dies wird dadurch erreicht, dass das Volumen des Verstärkungselements 7 zumindest abschnittsweise kleiner ist als das entsprechende Differenzvolumen zwischen dem Kern 11 und dem Unterwerkzeug 3. Dadurch wird das Halbzeug des Verstärkungselements 7 etwas "gequetscht" und das "gequetschte" Halbzeug steht unter einem hydrostatischen Druck. Dies hat den Vorteil, dass man auf einfache Weise eine gleichmäßige Druckverteilung erreichen kann. Der Druck kann durch unterschiedliche Wärmeausdehnungskoeffizienten zwar etwas abnehmen, fällt aber nicht auf Null. Das entstehende Bauelement 2 steht also stetig unter Druck.

Die abschnittsweise Verkleinerung des Differenzvolumens kann man beispielsweise dadurch bewirken, dass man einen Abstand d1 zwischen dem Kern 11 und der gegenüberliegenden Wand 17 der Ausnehmung etwas kleiner wählt als die entsprechende Dicke des Steges 8 in diesem Bereich. Alternativ oder zusätzlich kann vorgesehen sein, dass man die Tiefe t1 der ersten Ausnehmung 12 etwas kleiner wählt als die Dicke des ersten Schenkels 9. Weiterhin kann alternativ oder zusätzlich vorgesehen sein, dass man die Tiefe t2 der zweiten Ausnehmung 14 etwas kleiner wählt als die entsprechende Dicke des zweiten Schenkels 10.

Wenn Material von den Schenkeln 9, 10 verdrängt wird, kann dieses verdrängte Material in die erste Verlängerung 13 bzw. die zweite Verlängerung 15 fließen. Da die erste Verlängerung 13 und die zweite Verlängerung 15 aber einen kleineren Querschnitt haben als die entsprechenden Teilbereiche 12, 14, ergibt sich hier eine gewisse Drosselwirkung, so dass immer noch ein ausreichender Druck aufrechterhalten werden kann. Die Drosselwirkung kann nicht nur durch eine Verringerung der Tiefe der Verlängerungen 13, 15 erreicht werden, sondern auch durch eine andere Querschnittsverminderung.

Material, das aus dem Bereich des Stegs verdrängt wird, kann ebenfalls in einen Verdrängungsbereich verdrängt werden, der beispielsweise durch eine der Verlängerungen 13, 15 oder durch beide Verlängerungen 13, 15 gebildet wird. Dieses Material muss dann aber die Schenkel 9, 10 passieren, was wiederum nur gegen einen erhöhten Widerstand möglich ist.

Die Beaufschlagung mit erhöhtem Druck und erhöhter Temperatur erfolgt vorzugsweise über ein Öl, das in einem Öldruckraum im Oberwerkzeug 4 eingeführt wird. Der Öldruckraum ist von der Anordnung 6 aus Fasern und Kunststoff, durch eine nicht näher dargestellte Membran getrennt. Das Öl kann beispielsweise eine Temperatur im Bereich von 350° C bis 410° C haben, wenn die erhöhte Temperatur gewünscht ist. Nach dem Pressen, also nach der Druckbeaufschlagung, kann eine Absenkung der Temperatur auf etwa 30° C erfolgen.

Die Membran kann auf der der Anordnung 6 zugewandten Seite relativ glatt sein, also beispielsweise R_{z}-Wert von unter 0,1 µm haben, so dass sich eine extrem glatte Oberfläche des Bauelements 2 ergibt.

Die Druck- und die Temperaturkurve beim Beaufschlagen der Anordnung aus Fasern und Kunststoff in der Form 1 sollte möglichst parallel ansteigen und möglichst parallel wieder abklingen.

## Patentansprüche

1. Verfahren zum Erzeugen eines Bauelements (2), insbesondere eines Luft-, Land- oder Wasserfahrzeugs oder eines Rotorblatts einer Windenergieanlage, bei dem man eine Anordnung (6) aus Fasern und Kunststoff in eine Form (1) einlegt und mit erhöhtem Druck und erhöhter Temperatur beaufschlagt, wobei man eine Form (1) verwendet, die mindestens eine Ausnehmung (5) aufweist, in der man ein Verstärkungselement (7) anordnet, **dadurch gekennzeichnet, dass** man das Verstärkungselement (7), das bei Beaufschlagung mit erhöhter Temperatur einen zähflüssigen Zustand enthält, gemeinsam mit einem Kern (11) in die Ausnehmung (5) einlegt, wobei man ein Differenzvolumen zwischen Ausnehmung (5) und Kern (11) zumindest in einem vorbestimmten Bereich um ein vorbestimmtes Maß kleiner wählt als ein in diesem Bereich angeordneter Abschnitt des Verstärkungselements (7) und den Druck durch eine Membran aufbringt, die einen Öldruckraum begrenzt.

2. Verfahren nach Anspruch 1, **dadurch gekennzeichnet, dass** das Differenzvolumen außerhalb des vorbestimmten Abschnitts mindestens einen Verdrängungsbereich (13, 15) aufweist.

3. Verfahren nach Anspruch 2, **dadurch gekennzeichnet, dass** zumindest ein Verdrängungsbereich auf einer Seite des Verstärkungselements angeordnet ist, die von der Anordnung aus Fasern und Kunststoff abgewandt ist.

4. Verfahren nach Anspruch 2 oder 3, **dadurch gekennzeichnet, dass** der Verdrängungsbereich mit dem vorbestimmten Abschnitt über eine Drosselstelle verbunden ist.

5. Verfahren nach einem der Ansprüche 1 bis 4, **dadurch gekennzeichnet, dass** das Verstärkungselement (7) eine Höhe (h) aufweist und die Ausnehmung (5) eine Tiefe aufweist, die kleiner als die Höhe (h) ist.

6. Verfahren nach einem der Ansprüche 1 bis 5, **dadurch gekennzeichnet, dass** man ein Verstärkungselement (7) verwendet, das einen von der Anordnung (6) aus Fasern und Kunststoff abstehenden Steg (8) aufweist und ein Abstand (d1) zwischen Kern (11) und einer Wand (17) der Ausnehmung (5) im Bereich des Steges (8) kleiner ist als eine Dicke des Steges (8).

7. Verfahren nach einem der Ansprüche 1 bis 6, **dadurch gekennzeichnet, dass** man ein Verstärkungselement (7) verwendet, das mindestens einen an der Anordnung (6) aus Fasern und Kunststoff anliegenden ersten Schenkel (9) aufweist, wobei die Ausnehmung (5) einen ersten Teilbereich (12) zur Aufnahme des ersten Schenkels (9) aufweist und der erste Teilbereich (12) eine Tiefe (t1) aufweist, die kleiner ist als eine Dicke des ersten Schenkels (9).

8. Verfahren nach Anspruch 7, **dadurch gekennzeichnet, dass** der erste Teilbereich (12) eine erste Verlängerung (13) in eine Richtung parallel zur Anordnung (6) aus Fasern und Kunststoff aufweist, die eine Länge des ersten Teilbereichs (12) über die Länge des ersten Schenkels (9) hinaus verlängert, wobei die erste Verlängerung (13) eine Tiefe aufweist, die kleiner ist als die Tiefe (t1) des ersten Teilbereichs (12) außerhalb der Verlängerung (13).

9. Verfahren nach Anspruch 7 oder 8, **dadurch gekennzeichnet, dass** man ein Verstärkungselement (11) verwendet, das an einem vom ersten Schenkel (9) abgewandten Ende einen zweiten Schenkel (10) aufweist, wobei die Ausnehmung (5) einen zweiten Teilbereich (14) zur Aufnahme des zweiten Schenkels (10) aufweist und der zweite Teilbereich (14) eine Tiefe (t2) aufweist, die kleiner ist als eine Dicke des zweiten Schenkels (10).

10. Verfahren nach Anspruch 9, **dadurch gekennzeichnet, dass** der zweite Teilbereich (14) eine zweite Verlängerung (15) in eine Richtung parallel zur Anordnung (6) aus Fasern und Kunststoff aufweist, die eine Länge des zweiten Teilbereichs (14) über die Länge des zweiten Schenkels (10) hinaus verlängert, wobei die zweite Verlängerung (15) eine Tiefe aufweist, die kleiner ist als die Tiefe (t2) des zweiten Teilbereichs (14) außerhalb der Verlängerung (15).

## Claims

1. A method for producing a structural component (2), in particular for an aircraft, ground vehicle, or watercraft, or for a rotor blade of a wind turbine, in which method an arrangement (6) of fibers and plastic material is laid in a mold (1) and subjected to an increased pressure and an increased temperature, wherein a mold (1) is used which comprises at least one recess (5) in which a reinforcing element (7) is arranged, **characterized in that** the reinforcing element (7) which, when subjected to increased temperature, assumes a viscous state, is laid in the recess (5) together with a core (11), wherein a differential volume between the recess (5) and core (11), at least in a predetermined region, is chosen such that it is smaller by a predetermined amount than a segment of the reinforcing element (7) arranged in said region and wherein the pressure is applied through a membrane which delimits an oil pressure chamber.

2. The method according to claim 1, **characterized in that** the differential volume comprises at least one displacement region (13, 15) outside of the predetermined segment.

3. The method according to claim 2, **characterized in that** at least one displacement region is arranged on a side of the reinforcing element that faces away from the arrangement of fibers and plastic material.

4. The method according to claim 2 or 3, **characterized in that** the displacement region is connected to the predetermined segment via a throttle point.

5. The method according to one of claims 1 to 4, **characterized in that** the reinforcing element (7) has a height (h), and the recess (5) has a depth that is smaller than the height (h).

6. The method according to one of claims 1 to 5, **characterized in that** a reinforcing element (7) is used which comprises a web (8) protruding away from the arrangement (6) of fibers and plastic material, and a distance (d1) between the core (11) and a wall (17) of the recess (5) in the region of the web (8) is smaller than a thickness of the web (8).

7. The method according to one of claims 1 to 6, **characterized in that** a reinforcing element (7) is used which comprises at least a first leg (9) that bears against the arrangement (6) of fibers and plastic material, wherein the recess (5) has a first subregion (12) for accommodating the first leg (9) and the first subregion (12) has a depth (t1) that is smaller than a thickness of the first leg (9).

8. The method according to claim 7, **characterized in that** the first subregion (12) comprises a first extension (13) in a direction parallel to the arrangement (6) of fibers and plastic material, which extension extends a length of the first subregion (12) beyond the length of the first leg (9), wherein the first extension (13) has a depth that is smaller than the depth (t1) of the first subregion (12) outside of the extension (13).

9. The method according to claim 7 or 8, **characterized in that** a reinforcing element (11) is used which comprises a second leg (10) at an end facing away from the first leg (9), wherein the recess (5) comprises a second subregion (14) for accommodating the second leg (10) and the second subregion (14) has a depth (t2) that is smaller than a thickness of the second leg (10).

10. The method according to claim 9, **characterized in that** the second subregion (14) comprises a second extension (15) in a direction parallel to the arrangement (6) of fibers and plastic material, which extension extends a length of the second subregion (14) beyond the length of the second leg (10), wherein the second extension (15) has a depth that is smaller than a depth (t2) of the second subregion (14) outside of the extension (15).

## Revendications

1. Procédé de fabrication d'un composant structurel (2), en particulier d'un aéronef, d'un véhicule terrestre ou d'un bateau ou d'une pale de rotor d'une installation d'énergie éolienne, dans lequel on place un agencement (6) de fibres et de matière plastique dans un moule (1) et on le soumet à une pression élevée et à une température élevée, en utilisant un moule (1) qui présente au moins un évidement (5) dans lequel on dispose un élément de renforcement (7), **caractérisé en ce qu'**on place l'élément de renforcement (7), qui contient un état visqueux lorsqu'il est soumis à une température élevée, conjointement avec un noyau (11) dans l'évidement (5), dans lequel on choisit un volume différentiel entre l'évidement (5) et le noyau (11), au moins dans une zone prédéterminée, plus petit d'une mesure prédéterminée qu'une section de l'élément de renforcement (7) disposée dans cette zone, et on applique la pression à travers une membrane qui délimite un espace de pression d'huile.

2. Procédé selon la revendication 1, **caractérisé en ce que** le volume différentiel présente au moins une zone de refoulement (13, 15) en dehors de la section prédéterminée.

3. Procédé selon la revendication 2, **caractérisé en ce qu'**au moins une zone de déplacement est disposée sur un côté de l'élément de renforcement qui est opposé à l'ensemble de fibres et de matière plastique.

4. Procédé selon la revendication 2 ou 3, **caractérisé en ce que** la zone de refoulement est reliée à la section prédéterminée par un étranglement.

5. Procédé selon l'une des revendications 1 à 4, **caractérisé en ce que** l'élément de renforcement (7) présente une hauteur (h) et l'évidement (5) présente une profondeur inférieure à la hauteur (h).

6. Procédé selon l'une des revendications 1 à 5, **caractérisé en ce que** l'on utilise un élément de renforcement (7) qui présente une âme (8) faisant saillie de l'ensemble (6) de fibres et de matière plastique et **en ce qu'**une distance (d1) entre le noyau (11) et une paroi (17) de l'évidement (5) au niveau de l'âme (8) est inférieure à une épaisseur de l'âme (8).

7. Procédé selon l'une quelconque des revendications 1 à 6, **caractérisé en ce que** l'on utilise un élément de renforcement (7) qui comporte au moins une première branche (9) appliquée contre l'ensemble (6) de fibres et de matière plastique, l'évidement (5) comportant une première partie (12) destinée à recevoir la première branche (9), la première partie (12) ayant une profondeur (t1) inférieure à une épaisseur de la première branche (9).

8. Procédé selon la revendication 7, **caractérisé en ce que** la première partie (12) comporte un premier prolongement (13) dans une direction parallèle à l'ensemble (6) de fibres et de matière plastique, prolongeant une longueur de la première partie (12) au-delà de la longueur de la première branche (9), le premier prolongement (13) ayant une profondeur inférieure à la profondeur (t1) de la première partie (12) en dehors du prolongement (13).

9. Procédé selon la revendication 7 ou 8, **caractérisé en ce qu'**on utilise un élément de renforcement (11) qui présente une deuxième branche (10) à une extrémité opposée à la première branche (9), l'évidement (5) présentant une deuxième zone partielle (14) destinée à recevoir la deuxième branche (10) et la deuxième zone partielle (14) présentant une profondeur (t2) qui est inférieure à une épaisseur de la deuxième branche (10).

10. Procédé selon la revendication 9, **caractérisé en ce que** la seconde partie (14) comporte un second prolongement (15) dans une direction parallèle à l'ensemble (6) de fibres et de matière plastique, prolongeant une longueur de la seconde partie (14) au-delà de la longueur de la seconde branche (10), le second prolongement (15) ayant une profondeur inférieure à la profondeur (t2) de la seconde partie (14) hors du prolongement (15).
